# EUROPEAN PATENT APPLICATION

(11) **EP 1 650 971 A1**
(43) Date of publication of application: **26.04.2006**
(21) Application number: 04024847.8
(22) Date of filing: 19.10.2004
(51) Int. Cl.: H04N 7/173

(54) **Methods and devices for transmitting data to a mobile data processing unit**

(71) Applicant: APS Astra Platform Services GmbH, 85774 Unterföhring (DE)
(72) Inventor: Umer, Wilfried, 81827 München (DE)
(74) Representative: Heselberger, Johannes

(57) **Abstract**

The invention concerns a method for transmitting data to a mobile data processing unit (200), comprising the following steps:
a. receiving the data with a digital television reception device (100), wherein the data are included in the transport stream of digital television signals;
b. extracting the data from the transport stream of digital television signals; and
c. sending electromagnetic signals by the digital television reception device (100) to transmit the data from the digital television reception device (100) to the mobile data processing unit (200).

## Description

### 1. Technical field

The present invention relates to methods and devices for transmitting data to a mobile data processing unit.

### 2. The prior art

Mobile data processing units such as hand held computers, PDAs, intelligent mobile telephones, etc. become more and more popular. One reason is that the multimedia capabilities of these devices are constantly increasing. For examples mobile telephones nowadays include a wide variety of functions which exceed the basic necessities of communication.

However, one difficulty encountered with such mobile data processing systems is the download of data, in particular if the size of the data is comparatively large so that a download via a standard mobile communication network is slow and expensive. For example obtaining and installing a new processing application for a mobile telephone such as a new game over the GSM network is only feasible, if the game can be compressed to a small amount of data.

Another alternative is to connect the mobile data processing unit to a personal computer, which is in turn connected to the internet. This approach allows in case of a high speed internet access of the personal computer to quickly download large amount of data and to forward it to the connected mobile data processing unit. However, a considerable technical expertise about computers, the internet, etc. is required from a user, who intends to transmit data from a provider onto the mobile data processing unit in this manner.

It is therefore the problem of the present invention to provide an alternative method for transmitting data to a mobile data processing unit, which facilitates the download of large amounts of data without the use of a standard computer as well as to provide a corresponding device and a suitably adapted mobile data processing unit.

### 3. Summary of the invention

This problem is solved by a method for transmitting data to a mobile data processing unit, comprising the following steps:
a. receiving the data with a digital television reception device, wherein the data are included in the transport stream of digital television signals;
b. extracting the data from the transport stream of digital television signals; and
c. sending electromagnetic signals by the digital television reception device to transmit the data from the digital television reception device to the mobile data processing unit.

The invention is based on the idea to use the more and more popular digital television reception devices, also called set top boxes, not only for receiving the broadcast digital television signals, but to include into the main transport stream of broadcast media additional data. Once the combined signal has been received, the additional data are extracted and sent as an electromagnetic signal from the set top box to the mobile data processing unit, i.e. a unit which is separate and not related to the ordinary function of the digital television reception device.

As a result, the user friendly interface of a set top box or a similar digital television reception device can be used to transmit large amounts of data to the mobile data processing unit, for example a mobile telephone. The technically complex interaction with a computer and the internet is no longer necessary.

Another advantage is that the high downstream data rates of the digital television signals can be used to transfer also high amounts of additional data from a provider to the digital television reception device, while at the same time digital television signals are broadcast and received.

Preferably, the method further comprises storing the extracted data in the digital television reception device and presenting a message to a user about the availability of the extracted data, for example on the set top box and / or an interconnected television set. Thus, the user can control if and when the data, which are stored in the digital television reception device, are finally transmitted onto his mobile data processing unit. For example data representing a table with all results of a soccer tournament, which has been the subject matter of a related digital television broadcast, are made available to a user for transfer onto his mobile telephone or PDA.

In one embodiment the method step c., i.e. the final transmission of the data from the digital reception device to the mobile data processing unit, is performed in response to a user input at the digital television reception device or an interconnected television. This may for example be achieved by providing one or more suitable buttons on the remote control of the digital television reception device or the device itself. In another alternative, the final transmission is performed in response to the digital television reception device receiving a signal from the mobile data processing unit. Also a combination of the two initiating events is possible.

Preferably, the data are transmitted from the digital television reception device by means of electromagnetic radiation, such as infrared signals or RF-signals. Since the mobile data processing device needs in such an embodiment only to be positioned within the range of the electromagnetic radiation emitted from the digital television reception device, the final transfer of data to the mobile data processing device is very easy.

The present invention relates according to a further aspect to a method of transmitting data to a mobile data processing unit, comprising the following steps:
a. including the data to be transmitted into a transport stream of digital television signals to be broadcast;
b. broadcasting the transport stream of digital television signals with the included data in a digital format so that a digital television reception device receiving the digital television signals extracts the included data and forwards them with electromagnetic signals to the mobile data processing unit.

The sender of the digital television signals therefore emits a convoluted signal comprising both, the standard digital television signals to be broadcast and the additional signals for the final transmission, i.e. download, onto the mobile data processing unit. According to this aspect of the invention, the format of the convoluted signal is specifically adapted for the digital television device to extract the included data from the main stream of signals so that the user can watch digital television and in addition obtain the additional data for his mobile data processing unit.

In one embodiment of the above method, the data are included into the transport stream of digital television signals in response to a provider of the data receiving a signal from the digital television reception device and / or the mobile data processing unit. Such an advanced alternative allows the user to influence, whether additional data are transmitted to his digital television signal reception device for subsequent download on his mobile data processing device.

As mentioned above, it is preferred, if the content of the transport stream of digital television signals and the content of the included data are related. In a simple example a user may be offered the music of a movie broadcast via the digital television channel for immediate or later download on his mobile data processing unit.

According to a further aspect, the present invention relates to a digital television reception device comprising a first reception unit receiving a transport stream of digital television signals for display on a television system, the transport stream of digital television signals including additional data, an extraction unit extracting the additional data from the transport stream of digital signals, and a transmission unit transmitting the extracted additional data to an external mobile data processing unit by means of electromagnetic signals.

Preferably, the digital television reception device further comprises a memory storing the extracted additional data and a display unit for displaying a message concerning the availability of the stored data on the digital television reception device and / or on an attached television system.

In a preferred embodiment, the digital television reception device additionally comprises an input unit for a user input to initiate the transmission of the stored data and / or a second receiving unit receiving a signal from the mobile data processing unit to initiate the transmission of the stored data. Particularly preferred is an embodiment wherein the transmission unit is capable of a wireless transmission of the additional data.

Finally, the present invention relates to a mobile data processing unit comprising a first transceiver unit for communication with a mobile telephone network, a second transceiver unit for communicating with a digital television reception device and control means with instructions for the second transceiver to transmit a signal to the digital television reception device, which initiates the transmission of additional data, which are received by the digital television reception device together with digital television signals, to the second transceiver of the mobile data processing unit.

Further modifications of the claimed methods and the claimed devices are the subject matter of further dependent claims.

### 4. Short description of the drawings

In the following detailed description presently preferred embodiments of the invention are described with reference to the drawings which show:
- Fig. 1:: a schematic view of the various components of a digital television reception device to be used in the context of the present invention; and
- Fig. 2:: a schematic view of the various components of a mobile data processing unit to be used in the context of the present invention.

### 5. Detailed description of preferred embodiments

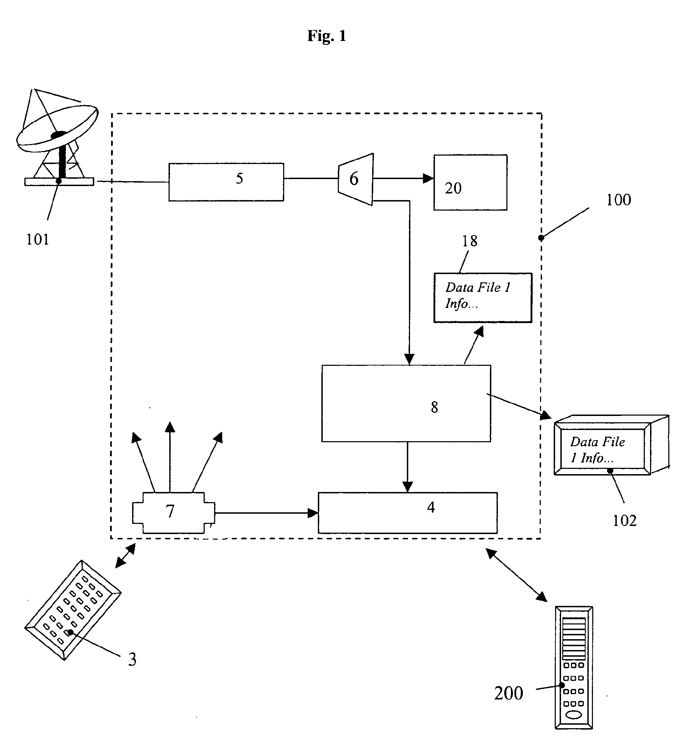

In the following the methods and devices according to the present invention are described with reference to a set top box 100 capable to receive digital television signals. The arrangement of all of the functional units of the set top box 100 in a single electronic device as indicated by the dashed box in Fig. 1 is not essential. One or more components of the set top box 100 described in the following description can be realized in additional devices, which are suitably connected to the other functional units of the set top box 100. Further, whereas in the following description reference is made to a set top box 100 as a device connected to a standard television set 102, the invention can - although presently less preferred - also be realized by means of a card with suitable electronics for the reception of broadcast digital television signals, such as a PC-card to be used in a personal computer.

Fig. 1 presents an overview of the set top box 100. A broadcast signal, carrying in the data transport stream among the digital television signals an additional data set defining e.g. a special application for a mobile data processing unit 200 is received by an antenna 101. Instead of a satellite signal received by the antenna 101, the transport stream can also be received as a terrestrial digital TV program or via a cable (not shown). The provider (not shown) of the digital television signal has modulated the additional data set onto the standard stream of digital television data, for example by including data packets with a specific header allowing the set top box to extract the additional data set during the further steps explained below. All kinds of convolution techniques for the digital television signals and the additional set of data are conceivable, including an additional compression of the convoluted stream to maximize the bandwidth for the data transmission to the set top box 100.

In one embodiment (not shown), the transmission of the additional data set is performed in response to the provider receiving a signal from one or more users. Such a initiating signal may be received via a standard return line from the set top box 100 to the provider using a modem connection or the like, or the mobile data processing unit 200, for example a mobile telephone, communicates a request for additional data to the provider via its communication network, for example a GSM network.

The content of the additional data set is preferably related to the content of the broadcast signal. One example is additional information relating to a live event, such as a soccer tournament. The additional data could then comprise a wide variety of data content, such as further statistics about the ongoing tournament or even a related computer game to be played by the user on the mobile data processing unit 200. Another application is the download of sound files relating to a movie presently broadcast in a channel of the digital television signals. The user can thus store the sound track of the movie on this mobile data processing unit, such as a MPEG-3 player to listen to it later again. These are only two examples and it is apparent to the person skilled in the art that many useful applications are conceivable wherein the content of the additional data complements in a meaningful manner the content of the digital television signals.

The set top box 100 can be operated using a remote control 3, which interacts with a remote control sensor 7 to issue commands to one or more central processing units (not shown) of the set top box 100. Alternatively or additionally, the set top box 100 may also comprise input means such as push buttons or switches (not shown in Fig. 1). A display 18 of the set top box 100 allows to display messages to a user.

In a front end unit 5 of the set top box 100, the broadcast signal provided from the antenna 101 is demodulated. Subsequently, the additional data set is filtered out by means of a data filter 6. The digital television signals are further processed by the set top box 100 in a standard manner. In Fig. 1 this is only schematically indicated by the unit 20, which represents the standard audio and / or video processing of the set top box 100.

It is to be noted that there are many ways to implement the data filter 6, for example by hardware or by software. A software solution may be more flexible, to adapt the set top box 100 to new data formats, whereas a hardware solution may be faster. Also combinations of the two alternatives are possible. Further, the function of the initial demodulation of the received signal, including both the digital television signals and the additional data set, and the subsequent filtering can be combined in a single unit or the data set could even be filtered out from the received signal, before the television signal is demodulated.

After the additional data set has been filtered out, it is stored in a memory 8 and remains in a "wait" status. The memory can be realized in many different ways, for example as a RAM or even as a permanent memory such as a disk drive or a flash ROM. The memory 8 can also be simply a certain range of the ordinary memory range of the set top box 100. The additional data set remains in the memory 8 until it is downloaded onto the mobile data processing unit 200 as described below or erased in response to a user command. Further it is also possible to include a timer function in the set top box 100 so that an additional data set, which has not been downloaded within a predetermined amount of time, will be automatically erased or overwritten by new data. In a simpler embodiment, the extracted data is not stored within the set top box but immediately sent to the mobile data processing unit as described below.

In order to inform the user about the availability of additional data for download onto the mobile data processing unit 200, the set top box 100 can present a message either on its own display 18, as schematically indicated in Fig. 1 (*"Data File 1 Info...'*') or the message will be presented on the screen on the connected television set 102. Also a combination of the two display functions is possible, wherein for example the display 18 informs only about the general availability of an additional set of data and wherein the display of the television set 102 present upon user request additional information about the data set, such as content, size and possibly costs related to the download of the data onto the mobile data processing unit 200.

The actual transfer of the stored set of additional data from the set top box 100 to the mobile data processing unit 200 can be triggered by various means. One option is a user input at the set top box 100, either directly of via the remote control 3. In this case the set top box 100 will try to establish a communication link, preferably a wireless link, to the mobile data processing unit 200 using its transceiver 4. Such a transceiver 4 can for example be realized as an infrared port, which communicates with a corresponding infrared port of the unit 200 (not shown in Fig. 1). In another embodiment RF-signals are used, following for example the Bluetooth protocol (not shown). Preferably, the set top box 100 comprises more than one possibility for a wireless communication so that it can flexibly adapt to different types of mobile data processing units 200. Finally, it is also possible to transfer the electromagnetic signals containing the data onto the mobile data processing unit using a connection via a cable (not shown).

Alternatively, the transfer of the stored data onto the mobile processing unit 200 could also be triggered by the unit 200. In this alternative embodiment, the user would simply position the unit 200 within the transmission range of the transmitter 4 and send a corresponding request to the set top box 100, which would then initiate the download of the stored data. Clearly also a combination is possible, wherein one side, the set top box 100 or the mobile data processing unit 200, sends at first a request, which is then confirmed by a user input at the other device to start the transmission.

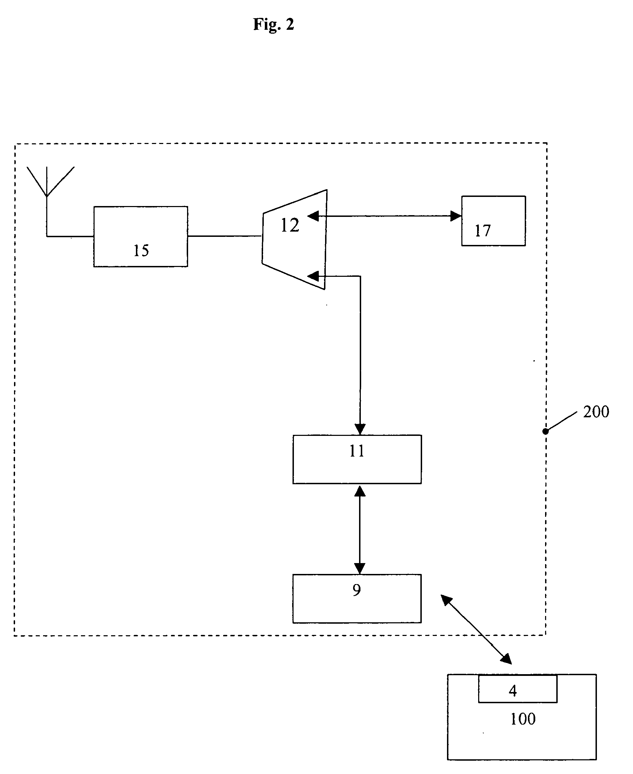

Fig. 2 shows schematically a mobile data processing unit 200 in accordance with aspects of the present invention. Generally, there are many mobile devices, which may be used in conjunction with the present invention, such as PDAs, hand held computers, notebooks, MPEG-3 players. However, since cellular telephones are most common and allow not only to process the receive data but also to communicate signals relating to the processed data over a communication network (such as a GSM-network or a CDMA-network), the following description will be focused on the modifications of such a devices for cooperation with the set top box 100 described above.

The cellular telephone comprises preferably two transceiving units, the first 15 for the standard communication network, such as a GSM- or a CDMA network, the other 9 for communicating with the transceiver 4 of the set top box 100. The second transceiver 9 may be provided as an infrared port or / and as a Bluetooth transceiver for RF-signals. In a preferred embodiment the cellular telephone 200 comprises a processor and a memory with instructions so that the transceiver 4 will send a request to the set top box 100 for transmission of available data. The request from the cellular telephone can be sent in response to a user input or automatically, when the cellular telephone is switched on. In the latter case, the download of the additional data stored in the set top box will automatically start, when the cellular telephone 200 is sufficiently close to the transceiver 4 of the set top box 100 and turned on. This is significantly easier for a user than downloading data from the internet with a personal computer and subsequently transferring it onto the cellular telephone for later use. The downloaded data is stored in the cellular telephone 200 in a memory 11, where it is available for further processing.

According to a more advanced aspect of the present invention, the downloaded data may comprise interactive features, which require that the user sends information from the cellular telephone 200 back to the provider (not shown) or another user of the digital television signals. For example an interactive game may be played by many users, wherein general information and / or results are broadcast on the television 102 and wherein each user plays with his cellular telephone 200 over the cellular network.

Since the interactive game (or the like) itself is created by the provider as additional data included in the digital television signals, the overall setup for such a game or a similar event is very easy for the user and does not require particular technical skills. Other functional units of the cellular telephone, such as a camera or a microphone may be involved in the interactive processing of the data received from the set top box 100.

The connection to the cellular network is reflected in Fig. 2, by the data filter 12 of the cellular telephone 200. Under the control of a processor and an operating system etc. of the cellular telephone (not shown) data resulting from processing the data received over the transceiver 9 can be sent out via the first transceiver 15 and an attached antenna. The data filter 12 assures that the transmission of this data does not interfere with other voice and data services 17 of the cellular telephone.

## Claims

1. A method for transmitting data to a mobile data processing unit (200), the method comprising the following steps:
a. receiving the data with a digital television reception device (100), wherein the data are included in the transport stream of digital television signals;
b. extracting the data from the transport stream of digital television signals; and
c. sending electromagnetic signals by the digital television reception device (100) to transmit the extracted data from the digital television reception device (100) to the mobile data processing unit (200).

2. The method according to claim 1 further comprising storing the extracted data in the digital television reception device (100).

3. The method according to claims 2, further comprising presenting a message to a user about the availability of the extracted data.

4. The method according to claim 2 or 3, wherein method step c. is performed in response to a user input at the digital television reception device (100).

5. The method according to one of the claims 2 to 4 , wherein method step c. is performed in response of the digital television reception device (100) receiving a signal from the mobile data processing unit (200).

6. The method according one of the preceding claims, wherein the data are transmitted from the digital television reception device (100) by means of electromagnetic radiation.

7. A method of transmitting data to a mobile data processing unit (200), comprising the following steps:
a. including the data to be transmitted into a transport stream of digital television signals to be broadcasted;
b. broadcasting the transport stream of digital television signals with the included data in a digital format so that a digital television reception device (100) receiving the digital television signals extracts the included data and forwards them to the mobile data processing unit (200).

8. The method of claim 7, wherein the method steps a. and / or b. are performed in response to a provider of the data receiving a signal from the digital television reception device (100) and / or the mobile data processing unit (200).

9. The method of claim 7 or 8, wherein the content of the transport stream of digital television signals and the content of the included data are related.

10. A digital television reception device (100) comprising:
a. a first reception unit (5) receiving a transport stream of digital television signals for display on a television system (102), the transport stream of digital television signals including additional data;
b. an extraction unit (6) extracting the additional data from the transport stream of digital signals;
c. a transmission unit (4) transmitting the extracted additional data to an external mobile data processing unit (200).

11. The digital television reception device (100) of claim 10 further comprising a memory (8) storing the extracted additional data.

12. The digital television reception device (100) of claim 11, further comprising a display unit for displaying a message concerning the availability of the stored data on the digital television reception device (100) and / or on an attached television system (102).

13. The digital television reception device (100) of claim 11 or 12 further comprising an input unit for a user input to initiate the transmission of the stored data.

14. The digital television reception device (100) of any of the claims 11 to 13 further comprising a second receiving unit receiving a signal from the mobile data processing unit (200) to initiate the transmission of the stored data.

15. The digital television reception device (100) of any of the claims 10 - 14, wherein the transmission unit (4) is capable of a wireless transmission of the additional data.

16. A mobile data processing unit (200) comprising:
a. a first transceiver unit (15) for communication with a mobile telephone network;
b. a second transceiver unit (9) for communicating with a digital television reception device (100);
c. control means with instructions for the second transceiver (9) to transmit a signal to the digital television reception device (100), which initiates the transmission of additional data, which are received by the digital television reception device (100) together with digital television signals, to the second transceiver (9) of the mobile data processing unit (200).

17. A mobile data processing unit (200) according to claim 16, wherein the control means further comprise instructions for the first transceiver unit (15) to transmit a request for the additional data to a provider of the digital television signals.
